# EUROPEAN PATENT SPECIFICATION

(11) **EP 2 443 931 B1**
(45) Date of publication and mention of the grant of the patent: **23.01.2019**
(21) Application number: 11158054.4
(22) Date of filing: 14.03.2011
(51) Int. Cl.: A22B 7/00, A22C 15/00

(54) **Handling support**
Handhabungshilfe
Support de manipulation

(30) Priority: 25.10.2010 FR 1004179
(43) Date of publication of application: 25.04.2012
(73) Proprietor: Serendipity B.V., 7006 RW Doetinchen (NL)
(72) Inventor: Leuver, Frank Christiaan, 7006 JZ Doetinchem (NL); Van der Laan, Theodorus Johannes Coenraad, 7006 JZ Doetinchem (NL)
(74) Representative: van Essen, Peter Augustinus

(56) References cited:
- DE-A1- 2 517 944
- FR-A1- 2 716 339
- FR-A1- 2 794 147
- NL-A- 9 101 561
- NL-C2- 1 020 411

## Description

The present invention relates to a handling support, notably for a system for conveying objects continuously, from one processing station to another, used in various automated production lines comprising a continuous overhead conveyor provided with load attachment hooks, particularly in the food industry where this support is appropriate for conveying meat cuts.

Supports are known for such applications for suspending pieces of meat, as described in the Dutch Patent Application No. 9101561, published on 16-04-1993, which discloses a support consisting of a straight stem of generally flat shape and decreasing cross section, including at its widest end an orifice for attachment to an automatic conveying member and on its lateral faces a plurality of slots intended to receive links for attaching objects such as cords used for attaching cuts of meat.

DE2517944 discloses relates to a suspension hanger which consists of a column with a plurality of radially projecting hooks, in particular for a guiding track sliding hook or "ham hook", that is rotatably mounted on a sliding hook attachable via a tubular track. The column has an arbitrary number of substantially identically formed hook elements, which have a central shaft with symmetrically distributed on its periphery and at the same height at least two hooks and which are provided at their stem ends with complementary coupling parts.

The present invention relates to a handling support according to claim 1.

This structure with two parallel uprights assembled as ladder uprights makes it possible, while retaining sufficient rigidity, to obtain a handling support that is considerably lighter than the necessarily more bulky supports of the prior art for conveying equivalent loads, as previously described.

Further embodiments are described in the depending claims.

An exemplary embodiment of a handling support according to the invention will be described hereinbelow, with reference to the appended drawings, in which:
- Figure 1 represents a perspective overview of such a support,
- Figure 2 shows an enlarged partial perspective view of the top end for attaching the support to the link hoop and for end attachment, and the reinforcements of the uprights in this region where the totality of the attached weights is exerted,
- Figure 3 shows the detail of a spacer fixing between the uprights and an example of members for fixing the attachment links for the products to be conveyed,
- Figure 4 shows a perspective view of another embodiment of a support of the invention.
- Figures 5a, 5b show a front view of the support of figure 4,
- Figure 6 shows and alternative head portion for the embodiment of figure 4.

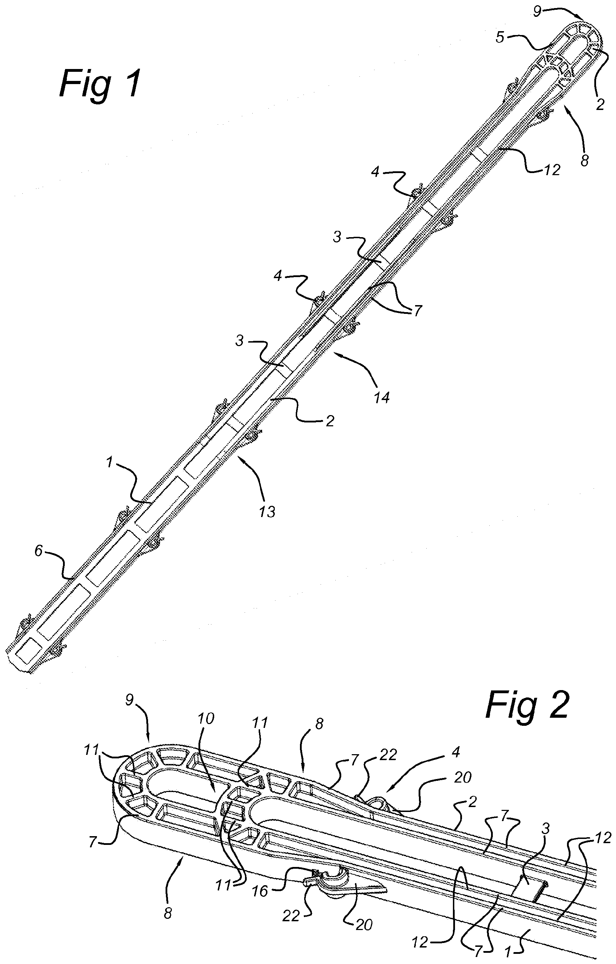

Figure 1 is a perspective view of a support according to the invention consisting of two parallel rectilinear uprights 1 and 2 interlinked by a series of spacers 3 and which include, on the external faces of the uprights 1 and 2 of the duly formed ladder, a plurality of attachment members 4 receiving attachment links for the loads to be conveyed such as the cords usually used for suspending cuts of meat in refrigerating conveyor systems. The attachment member 4 have a hook with an reinforcement rib 20 extending in longitudinal direction. In its inner surface, the hook has an inward extending retaining part 21 for preventing a load to get detached from the hook.

The uprights 1 and 2 will preferably be in the form of a flat central stem complemented at the edge with laterally positioned perpendicular ribs, either in 6 along a single edge, forming a T section, or in 7 along the two edges, forming an H section. These T or H profiles of the uprights 1 and 2 make it possible to obtain maximum rigidity for a minimum weight of the supports according to the invention, while providing them with sufficient rigidity for their load support function. The straight extending part 22 allows swift attachment of a load.

The structure of the support according to the invention will be adapted to the stresses of the loads to be supported. The top part, which supports all the weights of the support and the loads that are attached thereto, will be reinforced by a widening 8 of the uprights 1 and 2, this widened part being linked by hoops 9 and 10 of equivalent width, the whole being provided with double edge ribs 7 complemented with transversal ribs 11, forming a reinforced region of the attachment head as represented in Figure 2.

The uprights 1 and 2 will have a structure suited to the loads to be supported. Their flat central stem will have a reinforced thickness in the top part 12 that connects to the attachment head where the weights are concentrated as far as a level 13. From there it can have a reduced thickness will be provided for the rest of the length of the upright according to the more reduced load weights that can be attached in this region. Similarly, the maximum reinforcement by H-profile ribs 7 will be provided in the top part as far as a point 14, to be extended as far as the bottom end of the support by a T profile with a single reinforcing rib 6, corresponding to the lesser loads supported by this region 6.

The top part of the support comprising the double attachment hoop 9 and 10, which supports the totality of the load, support and attached objects, will be reinforced by the widening 8 of the uprights 1 and 2 and the fact that they are framed by the ribs 7 and 11 and the hoops 9 and 10. This reinforced top part will be extended by a top part 12 of the uprights 1 and 2 of reinforced thickness edged with perpendicular ribs 7 forming an H section with maximum resistance to the attachment weights as far as a point 14 after which only one of the ribs 7 is maintained, forming a T section that is sufficient to provide a support for lesser loads while retaining a sufficient rigidity in the bottom part of the support.

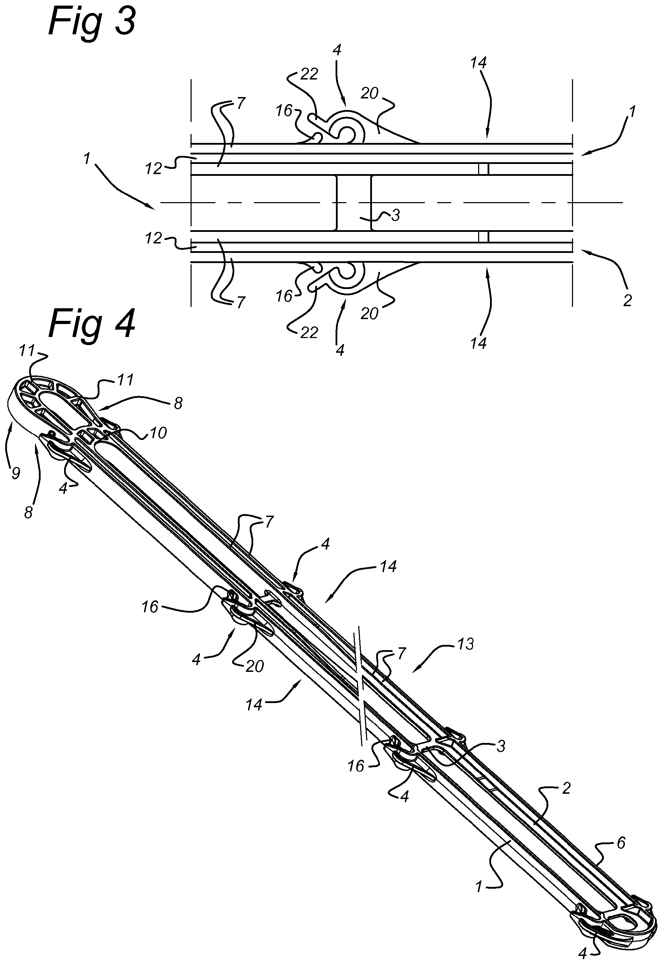

Figure 3 shows a partial view, in elevation, of the uprights 1 and 2 linked by a spacer 3 corresponding to the end of the top attachment part 12, where these uprights are reinforced by double ribs 7 forming an H section as appears in the end section of Figure 2 as far as a point 14 where the uprights 1 and 2 are extended with a single reinforcing rib 7 on their external edge forming a T section. An example of a load attachment tab is shown in Figure 3, with a safety retaining spur 16 positioned at the entry to the attachment region and intended to prevent an accidental detachment of the load attachment link.

In figures 4 and further, yet another embodiment of the invention is shown. In this embodiment, the modified design allows an even larger weight reduction of the support and allows it to carry even more weight.

The height of the perpendicular ribs 6, 7 can be reduced from 1.2-1.4 mm to 1.0-1.2 mm. In fact, in this embodiment, the height of the innen perpendicular rib 7 when starting from the hoop, first is equal of essentially equal to the height of the outer rib 7. Then, beyond the second pair of attachment members 4, the height of the inner ribs 7 is reduced to 7-9 mm. After the third pari of attachment members 4, the uprights continue in a T-shape.

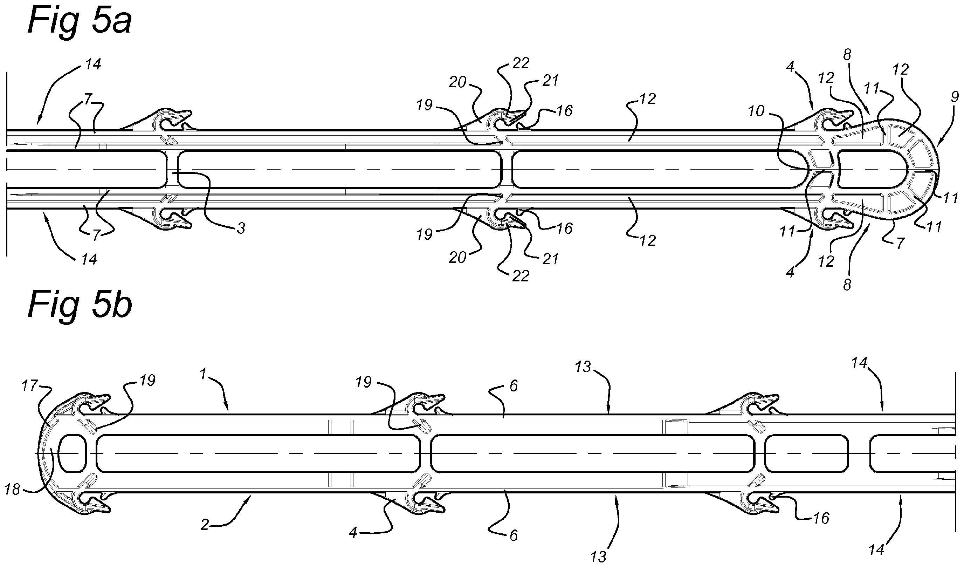

In the embodiment of figures 4 and 5, the seize of the hoops 9, 10 was reduced, the attachment members 4 have extended perpendicular ribs 19, and the other end of the support was modified.

The attachment members 4 are located at the position of the spacers 3. Thus, the extended ribs 19 contribute to the ridgidity of the uprights 1, 2 and to their connection. Tests showed that the hoops can extend up to the first attachment members 4. In that way, these first attachment members 4 can continue into hoop 10 which was found to provided additional strength. Thus, the uprights 1, 2 continue up to the first attachment members 4, and from there are connected via an outer hoop 9. The outer hoop 9 has two perpendicular ribs that ar interconnected by the transversal ribs 11. In order to provide additional strength and form a eye, the lower hoop 10 is positioned as mentioned at the location of the first attachement members 4 and its upper perpendicular rib continues into the attachment members 4. The lower hoop 10 also has two almost parallel perpendicular ribs and (one) transverse rib 11.

At its opposite end, the support has the rib 6 of the uprights 1, 2 continued as an end arch 17, and the flat flat central stem of each upright 1, 2 continues like the earlier-presented design in and end 18. This was found to further increase ridgidity and strength of the support.

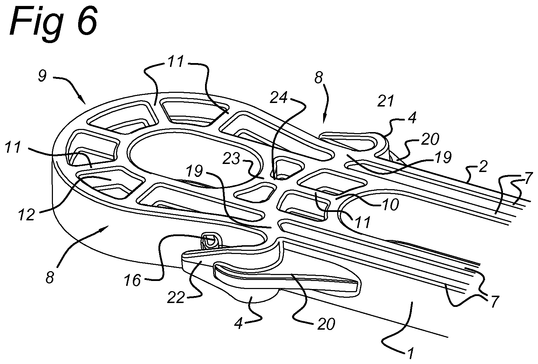

In figure 6, a further modification of the head part of the handling support is shown. In this head part, an additional hoop 23 was added which together with the upper hoop 9 define an rounded eye. The hoop 23 has connection with the hoop 10 via rib 24. It was found that the additional hoop 23 provides sufficient strength to keep the uprights 1, 2 together and to prevent breaking of the handling suport.

The duly described structural characteristics of load handling supports according to the invention show the possibilities of adapting such supports to a wide variety of loads, by adapting the choice of the constituent material and the dimensions of the various elements. This material will advantageously be a plastic material that can be moulded by injection into a mould with a single flat joint plane, all the upright and rib shapes being able to be stripped directly from the moulds, resulting in a lower manufacturing cost. The material can for instance be nylon (polyamid), PE (polyethene) or PP (polypropene). The design allows the support to carry loads of meat of between 100 and 200 kg. In particular, it allows it to safely carry between 150 and 180 kg of meat, for instance hams. The support can be between 1.0 and 1.5 m long. It was found that in the embodiment of figures 1-3 can carry up to 150 kg of meat and have a weight of between 130 and 100 gr. In particular, the embodiments of figures 4 and further can carry up to 170 kg of meat. It can have an even more reduces weight, resulting in a support of between 80 and 100 gr.

## Claims

1. Handling support for conveying objects, **characterized in that** it comprises two parallel uprights (1, 2) extending along the length of the handling support at a distance from one another and linked at one end to form a reinforced hoop (9, 10) for attaching to an automatic conveying member, a plurality of spacers (3) ensuring that the two uprights are maintained in the parallel position, these uprights including, on an opposite face, a plurality of attachment members (4) extending from the opposite faces of the uprights (1, 2) for attaching the objects to be conveyed, wherein each upright comprises double ribs (7) forming an H-section starting from said reinforced hoop (9, 10) and wherein the uprights (1, 2) end with a single reinforcing rib (6) on their external edge forming a T-section at the end of the handling support.

2. Handling support for conveying objects according to Claim 1, **characterized in that** the uprights (1, 2) are in the form of a flat central stem complemented at the edge with the ribs (6, 7) laterally positioned.

3. Handling support for conveying objects according to Claims 1-2, **characterized in that** the top part of the support which supports all the weights and the loads that are attached thereto is reinforced by a widening (8) of the uprights (1, 2), this widened part being linked by hoops (9, 10) of equivalent width, the whole being provided with the double ribs (7) complemented with transversal ribs (11).

4. Handling support for conveying objects according to any one of the preceding Claims, **characterized in that** the flat central stem of the uprights (1, 2) has a reinforced thickness in its top part (12) that connects to the attachment head as far as a level (13) from which a more reduced thickness is provided for the rest of the length of the upright according to the load weights that can be attached in this region, the maximum reinforcement by the H-section with double ribs (7) being provided in the top part as far as a given point (14) to be extended as far as the bottom end of the support by the T-section with the single reinforcing rib (6).

5. Handling support for conveying objects according to any one of the preceding Claims, **characterized in that** the attachment members (4) are positioned on the external faces of the uprights (1, 2) of the ladder and intended to receive load attachment links.

6. Handling support for conveying objects according to Claim 5, **characterized in that** a safety retaining spur (16) is positioned at the entry to the region of attachment of the attachment members (4).

7. Handling support for conveying objects according to any one of the preceding Claims, **characterized in that** said attachment members (4) are located at the position of the spacers (3).

8. Handling support for conveying objects according to any one of the preceding Claims, **characterized in that** said attachment members (4) comprise a hook with a reinforcement rib (20) extending in longitudinal direction.

## Patentansprüche

1. Handhabungshilfe zum Fördern von Gegenständen, **dadurch gekennzeichnet, dass** er zwei parallele Pfosten (1, 2) aufweist, die sich über die Länge der Handhabungshilfe in einem Abstand voneinander erstrecken und die an einem Ende verbunden sind zum bilden eines verstärkten Reifen (9, 10), um an einem automatischen Förderorgan zu befestigen, eine Vielzahl von Abstandshaltern (3) um zwei Pfosten in der parallelen Position zu halten, wobei diese Pfosten auf einer gegenüberliegenden Seite eine Mehrzahl von Befestigungselementen (4) die sich von den gegenüberliegenden Seiten der Pfosten (1, 2) erstrecken zum Befestigen der zu transportierenden Gegenstände umfassen, wobei jede Pfoste Doppelrippen (7) aufweist, die ausgehend von dem verstärkten Reifen (9, 10) einen H-Abschnitt bilden, und wobei die Pfosten (1, 2) mit einer einzigen Verstärkungsrippe (6) enden und einen T-Abschnitt bilden am Ende der Handhabungshilfe.

2. Handhabungshilfe zum Fördern von Gegenständen nach Anspruch 1, **dadurch gekennzeichnet, daß** die Pfosten (1, 2) als flacher Mittelsteg ausgebildet sind, der am Rand mit den Rippen (6, 7) seitlich angeordnet ergänzt ist.

3. Handhabungshilfe zum Fördern von Gegenständen nach den Ansprüchen 1 - 2, **dadurch gekennzeichnet, daß** der obere Teil des hilfens, der alle Gewichte und die daran befestigten Lasten trägt, durch eine Verbreiterung (8) der Pfosten (1, 2) verstärkt ist, wobei dieser verbreiterte Teil durch Reifen (9, 10) mit äquivalenter Breite verbunden ist, wobei das Ganze mit den doppelten Rippen (7) versehen ist, die mit quer verlaufenden Rippen (11) ergänzt sind.

4. Handhabungshilfe zum Fördern von Gegenständen nach einem der vorhergehenden Ansprüche, **dadurch gekennzeichnet, daß** der flache mittlere Schaft der Pfosten (1, 2) in seinem oberen Teil (12) eine verstärkte Dicke aufweist, die mit dem Befestigungskopf bis zu einem Ende (13) verbunden ist, von der für die restliche Länge des Pfostens eine geringere Dicke entsprechend den Lastgewichten vorgesehen ist, die in diesem Bereich angebracht werden können, wobei die maximale Verstärkung durch H-Abschnitt mit den doppelten Rippen (7) oben vorgesehen ist bis zu einem gegebenen Punkt (14) bis zum unteren Ende des hilfens durch ein T-Abschnitt mit den einzigen Rippen (6) verlängert werden.

5. Handhabungshilfe zum Fördern von Gegenständen nach einem der vorhergehenden Ansprüche, **dadurch gekennzeichnet, dass** die Befestigungselementen (4) auf den Außenseiten der Pfosten (1, 2) der Leiter angeordnet sind und Lastaufnahmebrücken aufnehmen sollen.

6. Handhabungshilfe zum Fördern von Gegenständen nach Anspruch 5, **dadurch gekennzeichnet, daß** am Eintritt in den Befestigungsbereich der Befestigungselementen (4) ein Sicherheitshaltevorsprung (16) angeordnet ist.

7. Handhabungshilfe zum Fördern von Gegenständen nach einem der vorhergehenden Ansprüche, **dadurch gekennzeichnet, dass** die Befestigungselementen (4) sich an der Position der Abstandshalter (3) befinden.

8. Handhabungshilfe zum Fördern von Gegenständen nach einem der vorhergehenden Ansprüche, **dadurch gekennzeichnet, dass** die Befestigungselementen (4) einen Haken mit einer Verstärkungsrippe (20) umfassen, die sich in Längsrichtung erstreckt.

## Revendications

1. Support de manutention pour le transport d'objets, **caractérisé en ce qu'**il est constitué de deux montants parallèles (1, 2) s'étendant sur la longueur du support de manipulation à distance les uns des autres et reliés à une extrémité à un arceau renforcé (9, 10) pour accrochage à un organe de transport automatique, une pluralité d'entretoises (3) assurant le maintien en position parallèle des deux montants, ces montants comprenant, sur une face opposée, une pluralité d'organes d' accrochage (4) des objets à transporter s'étendant des faces opposées des montants (1, 2) dans lequel chaque montant comprend des doubles nervures (7) formant une section en H à partir dudit arceau renforcé (9, 10) et dans lequel les montants (1, 2) se terminent par une seule nervure de renfort (6) sur leur bord extérieur formant une section en T la fin du support de manutention.

2. Support de manutention pour le transport d'objets selon la revendication 1, **caractérisé en ce que** les montants (1, 2) ont la forme d'une tige centrale plate complétée en bordure de lesdites nervures (6, 7) qui sont disposées latéralement.

3. Support de manutention pour le transport d'objets selon les revendications 1 et 2, **caractérisé en ce que** la partie supérieure du support qui supporte tous les poids et les charges qui y sont accrochés est renforcée par un élargissement (8) des montants (1, 2), cette partie élargie étant reliée par des arceaux (9, 10) de largeur équivalente, l'ensemble étant muni des nervures doubles (7) complété de nervures transversales (11).

4. Support de manutention pour le transport d'objets les revendications 1 et 2, **caractérisé en ce que** la tige centrale plate des montants (1, 2) a une épaisseur renforcée dans sa partie supérieure (12) se raccordant à la tête d'accrochage jusqu'à un niveau (13) à partir duquel une épaisseur plus réduite est prévue pour le reste de la longueur du montant en fonction des poids de charges pouvant être accrochées dans cette zone, le renforcement maximum par ce profil en H aux doubles nervures (7) en partie supérieure jusqu'à un point donné (14) pour être prolongée jusqu'à l'extrémité inférieure du support par ce profil en T à une seule nervure (6).

5. Support de manutention pour le transport d'objets selon les revendications 1 et 2 **caractérisé en ce que** les organes d' accrochage (4) sont disposées sur les faces externes des montants (1, 2) de l'échelle et destinées à recevoir des liens d'accrochage des charges.

6. Support de manutention pour le transport d'objets selon la revendication 5, **caractérisé en ce qu'**un ergot de retenue de sécurité (16) est disposé à l'entrée de la zône des organes d'accrochage (4).

7. Support de manutention pour le transport d'objets selon l'une quelconque des revendications précédentes, **caractérisé en ce que** les organes d'accrochage (4) sont situées à la position des entretoises (3).

8. Support de manutention pour le transport d'objets selon l'une quelconque des revendications précédentes, **caractérisé en ce que** les organes d'accrochage (4) comprennent un crochet avec une nervure de renfort (20) s'étendant dans la direction longitudinale.
